# EUROPEAN PATENT APPLICATION

(11) **EP 4 375 345 A1**
(43) Date of publication of application: **29.05.2024**
(21) Application number: 22845716.4
(22) Date of filing: 15.06.2022
(51) Int. Cl.: C09J 7/30, B32B 25/08, B32B 27/00, B32B 27/34, C09J 177/00

(54) **THERMOPLASTIC RESIN COMPOSITION, RESIN SHEET, AND LAMINATED SHEET**

(30) Priority: 20.07.2021 JP 2021119437
(71) Applicant: Polyplastics-Evonik Corporation, Tokyo, 163-0913 (JP)
(72) Inventor: MUTSUDA, Mitsuteru, Tokyo 108-8230 (JP); OCHIAI, Takuya, Tokyo 163-0913 (JP); FUJIKI, Daisuke, Tokyo 163-0913 (JP)
(74) Representative: Grünecker Patent- und Rechtsanwälte PartG mbB
(86) International application number: PCT/JP2022/023952
(87) International publication number: WO 2023/002780

(57) **Abstract**

The present disclosure provides a thermoplastic resin composition and the like to be used for molding a resin sheet, in which the resin sheet is to be used in cross-linking adhesion with rubber. The thermoplastic resin composition includes a thermoplastic resin including a first polyamide (A) having a melting point of from 180°C to 230°C and a block copolymer (B) containing a second polyamide and a polyether. A ratio of a weight of the first polyamide (A) to a weight of the block copolymer (B) is from 65/35 to 85/15, and the thermoplastic resin composition has an amino group concentration of 20 mmol/kg or more.

## Description

### Technical Field

The present disclosure relates to a thermoplastic resin composition, a resin sheet, and a laminated sheet.

### Background Art

A laminated sheet in which a resin sheet layer formed of a resin sheet and a rubber layer formed of rubber are laminated is used for the production of shoe soles, etc.

The resin sheet is constituted by a thermoplastic resin composition.

The resin sheet layer and the rubber layer are cross-linked and adhered to each other.

For a method of manufacturing a laminated sheet, there is known a method of obtaining a laminated sheet in which the resin sheet and an uncross-linked rubber composition are heated to be cross-linked and adhered, thereby providing a laminated sheet in which the resin sheet layer and the rubber layer are cross-linked and adhered to each other (e.g., Patent Document 1).

### Citation List

### Patent Document

Patent Document 1: JP 5466928 B

### Summary of Invention

### Technical Problem

The time required for adequate cross-linking at the time of cross-linking adhesion can be reduced by increasing the cross-linking temperature. For example, when the time for completing the cross-linking at 160°C is about 15 minutes, the time for completing the cross-linking at 170°C would be about 5 to 7 minutes, resulting in a 2 to 3 times increase in productivity.

However, a mere increase in the cross-linking temperature may deform the resin sheet, resulting in failure to obtain a laminated sheet with the desired shape.

In addition, when a laminated sheet is repeatedly produced using the same mold, heat accumulates in the mold even when the cross-linking temperature is constant, and as a result, deformation of the resin sheet is likely to occur in the laminated sheet to be obtained later.

Therefore, it may be required to have a resin sheet that is hardly subject to deformation even at a high cross-linking temperature.

In addition, a resin sheet layer may be required to have excellent adhesion to a rubber layer.

Furthermore, while a resin sheet is obtained by heat-molding a thermoplastic resin composition by a molding method such as a melt extrusion method, excellent moldability may also be required at the time of this type of molding.

Accordingly, a first object of the present disclosure is to provide a thermoplastic resin composition which prevents a resin sheet from being deformed even at a high cross-linking temperature, has excellent adhesion between a resin sheet layer and a rubber layer, and also has excellent moldability at the time of producing the resin sheet.

A second object of the present disclosure is to provide a resin sheet which is obtained by molding the thermoplastic resin composition.

Furthermore, a third object of the present disclosure is to provide a laminated sheet in which a resin sheet layer formed of the resin sheet and a rubber layer formed of rubber are laminated.

### Solution to Problem

A first aspect of the present disclosure relates to a thermoplastic resin composition to be used for molding a resin sheet, the resin sheet to be used in cross-linking adhesion with rubber, the thermoplastic resin composition including a thermoplastic resin containing a first polyamide (A) having a melting point of from 180°C to 230°C and a block copolymer (B) containing a second polyamide and a polyether, in which a ratio of a weight of the first polyamide (A) to a weight of the block copolymer (B) is from 65/35 to 85/15, and the thermoplastic resin composition has an amino group concentration of 20 mmol/kg or more.

Preferably, the first polyamide (A) has an amino group concentration of 20 mmol/kg or more, and the block copolymer (B) has an amino group concentration of 20 mmol/kg or more.

Preferably, the thermoplastic resin composition has the amino group concentration of 40 mmol/kg or more.

Preferably, the first polyamide (A) contains at least one selected from the group consisting of polyamide 612, polyamide 610, polyamide 613, and polyamide 6.

Preferably, the thermoplastic resin composition has a bending modulus of elasticity according to ISO178 of from 1000 to 1200 MPa.

A second aspect of the present disclosure relates to a resin sheet obtained by molding the thermoplastic resin composition described above.

A third aspect of the present disclosure relates to a laminated sheet including: a resin sheet layer formed of the resin sheet described above; and a rubber layer formed of rubber, the resin sheet layer and the rubber layer being laminated, in which the resin sheet layer and the rubber layer are cross-linked and adhered to each other.

### Advantageous Effects of Invention

The present disclosure may provide a thermoplastic resin composition which prevents a resin sheet from being deformed even at a high cross-linking temperature, has excellent adhesion between a resin sheet layer and a rubber layer, and also has excellent moldability at the time of producing the resin sheet.

The present disclosure may also provide a resin sheet obtained by molding the thermoplastic resin composition described above.

Furthermore, the present disclosure may provide a laminated sheet in which a resin sheet layer formed of the resin sheet and a rubber layer formed of rubber are laminated.

### Brief Description of Drawings

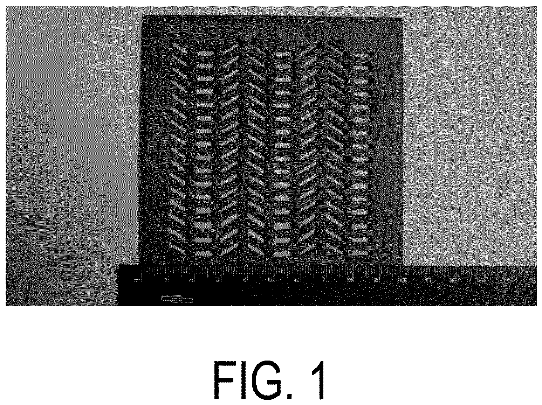

FIG. 1 is a photograph of a plate-shaped mold having a plurality of through holes used in Examples and Comparative examples.

### Description of Embodiments

Hereinafter, an embodiment of the present disclosure will be described.

It should be noted that the respective configurations and the combinations thereof in the respective embodiments are only examples, and the configurations may be added, omitted, substituted, or otherwise modified as appropriate within a scope that does not depart from the spirit of the present disclosure. The present disclosure is not limited by the embodiments and is limited only by the claims.

Each aspect disclosed in the present specification can be combined with any other feature disclosed herein.

Hereinafter, the thermoplastic resin composition, the resin sheet, and the laminated sheet according to the present embodiment will be described by exemplifying a thermoplastic resin composition, a resin sheet, and a laminated sheet used in the manufacture of shoe soles.

### Thermoplastic resin composition

First, the thermoplastic resin composition according to the present embodiment will be described.

The thermoplastic resin composition according to the present embodiment is used for molding a resin sheet. The resin sheet is a resin sheet to be used in cross-linking adhesion with rubber.

Also, the thermoplastic resin composition according to the present embodiment contains a thermoplastic resin.

The thermoplastic resin includes a first polyamide (A) having a melting point of from 180°C to 230°C and a block copolymer (B) containing a second polyamide and a polyether.

An amino group concentration of the thermoplastic resin composition according to the present embodiment is 20 mmol/kg or more.

### First polyamide (A)

Examples of the first polyamide (A) include aliphatic polyamides and aromatic polyamides.

The first polyamide (A) may be a homopolyamide or a copolyamide.

Note that the first polyamide (A) is a concept that does not include a block copolymer.

Examples of the aliphatic polyamide include a polyamide of an aliphatic diamine component and an aliphatic dicarboxylic acid component, a polyamide of a lactam, a polyamide of an aminocarboxylic acid, and a polyamide of an aliphatic diamine component, an aliphatic dicarboxylic acid component, and a lactam and/or an aminocarboxylic acid.

Examples of the aliphatic diamine component include C4-16 alkylenediamines (e.g., tetramethylenediamine, hexamethylenediamine, and dodecanediamine). The aliphatic diamine component is preferably a C6-14 alkylenediamine, more preferably a C6-12 alkylenediamine.

Specific examples of the aliphatic dicarboxylic acid include C4-20 alkane dicarboxylic acids (e.g., adipic acid, sebacic acid, and dodecanedioic acid). The aliphatic dicarboxylic acid is preferably a C5-16 alkanedicarboxylic acid, more preferably a C6-14 alkanedicarboxylic acid.

Examples of the lactam include lactams having from 4 to 20 carbon atoms (e.g., ε-caprolactam and ω-laurolactam). The lactam is preferably a lactam having from 4 to 16 carbon atoms.

Examples of the aminocarboxylic acid include C4-20 aminocarboxylic acids (e.g., ω-aminoundecanoic acid). The aminocarboxylic acid is preferably a C4-16 aminocarboxylic acid, more preferably a C6-14 aminocarboxylic acid.

Examples of the aliphatic polyamide include polyamide 6, polyamide 610, polyamide 611, polyamide 612, polyamide 613, polyamide 1010, polyamide 66/11, polyamide 66/12, and polyamide 6/12/612.

For the aliphatic polyamide, polyamide 6, polyamide 610, polyamide 612, polyamide 613, and polyamide 1010 are preferable.

For the aliphatic polyamide, polyamide 612, polyamide 610, polyamide 613, and polyamide 6 are particularly preferable.

The aromatic polyamide is a concept that includes a polyamide containing at least one of an aromatic diamine component or an aromatic dicarboxylic acid component as a constituent unit.

Examples of the aromatic polyamide include polyamides in which both a diamine component as a constituent unit and a dicarboxylic acid component as a constituent unit are aromatic components (also referred to as "wholly aromatic polyamide", "aramid", or the like).

The aromatic polyamide may be a modified polyamide. Examples of the modified polyamide include polyamides having a branched chain structure.

Examples of the aromatic diamine component include meta-xylylenediamine.

Examples of the aromatic dicarboxylic acid component include terephthalic acid and isophthalic acid. The aromatic dicarboxylic acid component may be a dimer acid or the like.

The first polyamide (A) is preferably an aliphatic polyamide.

The first polyamide (A) may be used alone or in combination of two or more.

A melting point of the first polyamide (A) is from 180°C to 230°C, preferably from 190°C to 230°C, and more preferably from 200°C to 220°C.

Due to the fact that the melting point of the first polyamide (A) is 180°C or higher, the resin sheet is hardly deformed even when heated at a high temperature (e.g., 170°C or higher) in order to allow a cross-linking reaction between the resin sheet formed of the thermoplastic resin composition and the rubber, and as a result, deformation of the laminated sheet of the resin sheet layer and the rubber layer is suppressed.

Due to the fact that a melting point of the block copolymer (B) is lower than about 200°C, but the melting point of the first polyamide (A) is 230°C or lower, the difference between the melting point of the block copolymer (B) and the melting point of the first polyamide (A) can be made small, and as a result, the dispersibility of the block copolymer (B) and the first polyamide (A) becomes good.

Since the melting point of the first polyamide (A) is 230°C or lower, when a resin sheet is formed by melting the thermoplastic resin composition (e.g., a melt extrusion method), the melting temperature can be lowered, and as a result the viscosity of the block copolymer (B) can be prevented from decreasing excessively, and as a result, a resin sheet having a desired shape can be easily obtained.

In the present embodiment, the melting point can be measured by using, for example, a differential scanning calorimeter (DSC).

More specifically, first, about 5 mg of a sample for measuring the melting point is prepared, and two containers made of a metal (e.g., aluminum) of the same shape and the same weight are prepared.

One of the two containers is then charged with the sample, and the other container is left empty.

The melting points can be determined from a DSC curve obtained by placing the container containing the sample and the empty container as a reference in the DSC and increasing the temperature of the sample at a temperature increase rate of 10°C/min while flowing nitrogen gas.

The melting point can be determined by subjecting the same sample to differential scanning calorimetry twice, and is determined as the peak value of the second DSC curve.

The first polyamide (A) preferably has an amino group (free amino group).

The first polyamide (A) may have an amino group at a terminal, or may have an amino group in a branched portion. It is preferable that the first polyamide (A) have an amino group at a terminal from the perspective that the amino group easily reacts.

An amino group concentration of the first polyamide (A) is preferably 20 mmol/kg or more, more preferably 30 mmol/kg or more, even more preferably 40 mmol/kg or more, still more preferably 50 mmol/kg or more, and particularly preferably 60 mmol/kg or more.

The amino group concentration of the first polyamide (A) is preferably 120 mmol/kg or less.

In the present embodiment, the amino group concentration can be determined by dissolving a sample for measuring the amino group concentration in a mixed solution of phenol and methanol, and performing neutralization titration with an N/100 hydrochloric acid solution.

The N/100 hydrochloric acid solution can be obtained by diluting 35 wt.% of an aqueous hydrochloric acid solution with methanol.

The amino group concentration means the concentration of free amino groups.

A number average molecular weight of the first polyamide (A) is, for example, from 8000 to 200000, preferably from 9000 to 150000, and more preferably from 10000 to 100000.

Note that, in the present embodiment, the number average molecular weight is measured from a molecular weight distribution in terms of polystyrene using gel permeation chromatography (GPC) using a chloroform eluent. For a column for use in the GPC, a column appropriate for measuring the molecular weight may be used.

### Block copolymer (B)

The block copolymer (B) is a block copolymer containing a second polyamide and a polyether.

A block copolymer means a copolymer containing a segment (block) A and a segment (block) B and having an A-B structure.

The block copolymer (B) contains a second polyamide as a hard segment and a polyether as a soft segment.

The second polyamide as the hard segment becomes a pseudo cross-linking point with the second polyamide as the hard segment of the adjacent block copolymer. The polyether as the soft segment is a portion that can be freely deformed, but is restricted to some extent by the pseudo cross-linking point. Therefore, the block copolymer (B) has elasticity; that is, it is an elastomer.

In addition, the second polyamide as the hard segment becomes a pseudo cross-linking point, which allows the block copolymer (B) to aggregate. Further, this aggregation can be released by heating. Therefore, the block copolymer (B) has plasticity.

The block copolymer (B) is therefore a thermoplastic elastomer.

The block copolymer (B) is preferably a multiblock copolymer, which means a block copolymer having three or more blocks in one molecule, from the perspective of enhancing the thermoplasticity and elasticity.

Examples of the polyether as the soft segment include polyalkylene glycols (e.g., polyethylene glycol, polypropylene glycol, and polytetramethylene glycol).

The polyalkylene glycol is preferably a poly C2-6 alkylene glycol, and more preferably a poly C2-4 alkylene glycol.

A number average molecular weight of the polyether as the soft segment is, for example, from 100 to 10000, preferably from 300 to 6000 (e.g., from 300 to 5000), more preferably from 500 to 4000 (e.g., from 500 to 3000), and even more preferably from 1000 to 2000.

The second polyamide may be a homopolyamide or a copolyamide.

Note that the second polyamide is a concept that does not include a block copolymer.

For the second polyamide, the polyamides listed as the first polyamide can be used.

The second polyamide as the hard segment may be the same as or different from the first polyamide.

In addition to the polyamides listed as the first polyamide, specific examples of the second polyamide include the following polyamides.

Examples of the aliphatic polyamide, among the second polyamides, include polyamide 12, polyamide 46, and polyamide 66 in addition to the aliphatic polyamides listed as the first polyamide.

Examples of the second polyamide also include alicyclic polyamides.

Examples of the alicyclic polyamide include polyamides including at least one selected from, at least, alicyclic diamine components or alicyclic dicarboxylic acid components as a constituent component.

In particular, as the diamine component and the dicarboxylic acid component as the alicyclic polyamide, the aliphatic diamine component and/or the aliphatic dicarboxylic acid component exemplified above are preferably used in combination with the alicyclic diamine component and/or the alicyclic dicarboxylic acid component. Such alicyclic polyamide resins are highly transparent and are known as so-called transparent polyamides.

Examples of the alicyclic diamine component include diaminocycloalkane, bis(aminocycloalkyl)alkane and hydrogenated xylylenediamine.

Examples of the diaminocycloalkane include diaminocyclohexane. The diaminocycloalkane is preferably a diamino C5-10 cycloalkane.

Examples of the bis(aminocycloalkyl)alkane include bis(4-aminocyclohexyl)methane, bis(4-amino-3-methylcyclohexyl)methane, and 2,2-bis(4'-aminocyclohexyl)propane. The bis(aminocycloalkyl)alkane is preferably a bis(amino C5-8 cycloalkyl)C1-3 alkane.

The alicyclic diamine component may have, for example, a substituent such as an alkyl group.

The alkyl group is preferably a C1-6 alkyl group, more preferably a C1-4 alkyl group, and even more preferably a C1-2 alkyl group (such as a methyl group or an ethyl group).

Examples of the alicyclic dicarboxylic acid include cycloalkane dicarboxylic acids (e.g., cyclohexane-1,4-dicarboxylic acid and cyclohexane-1,3-dicarboxylic acid).

The alicyclic dicarboxylic acid is preferably C5-10 cycloalkane-dicarboxylic acid.

Among the alicyclic polyamide resins, a condensate (homo-or co-polyamide) of the aliphatic dicarboxylic acid component and the alicyclic diamine component or the like is preferable. Typical alicyclic first polyamide resins (alicyclic polyamide resins containing an alicyclic diamine and an aliphatic dicarboxylic acid as constituent components) include alicyclic polyamides represented by Formula (1) below.

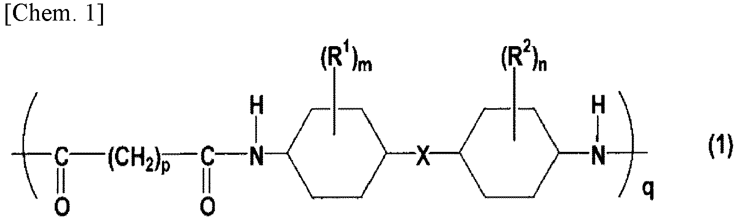

In Formula (1) above, X represents a direct bond, an alkylene group, or an alkenylene group. R¹ and R² represent the same or different substituents. m is an integer of 0 or from 1 to 4. n is an integer of 0 or from 1 to 4. p is an integer of 1 or more. q is an integer of 1 or more.

In Formula (1) above, examples of the alkylene group (or alkylidene group) represented by X include C1-6 alkylene groups (or alkylidene groups) (e.g., methylene, ethylene, ethylidene, propylene, propane-1,3-diyl, 2-propylidene, and butylenes).

The alkylene group (or alkylidene group) represented by X is preferably a C1-4 alkylene group (or alkylidene group), more preferably a C1-3 alkylene group (or alkylidene group).

Examples of the alkenylene group represented by X include C2-6 alkenylene groups (e.g., vinylene and propenylene).

The alkenylene group represented by X is preferably a C2-4 alkenylene group.

In Formula (1) above, examples of R¹ and R² include hydrocarbon groups (e.g., alkyl groups).

Examples of the alkyl group include C1-6 alkyl groups (e.g., methyl, ethyl, propyl, isopropyl, and butyl groups).

The alkyl group is preferably a C1-4 alkyl group, more preferably a C1-2 alkyl group.

In Formula (1) above, the number m for R¹ can be selected from integers of 0 and from 1 to 4, but is usually an integer of 0 or from 1 to 3, preferably an integer of 0 or from 1 to 2, more preferably 0 or 1. A substituted position of R¹ can be selected from 2-, 3-, 5-, and 6-positions relative to the amide group, and is preferably 2- or 6-position.

In Formula (1) above, the number n for R² can be selected from integers of 0 and from 1 to 4, but is usually an integer of 0 or from 1 to 3, preferably an integer of 0 or from 1 to 2, more preferably 0 or 1. A substituted position of R¹ can be selected from 2-, 3-, 5-, and 6-positions relative to the amide group, and is preferably 2- or 6-position.

In Formula (1) above, p is, for example, 4 or more (e.g., from 4 to 30), preferably 6 or more (e.g., from 6 to 20), and more preferably 8 or more (e.g., from 8 to 15).

In Formula (1) above, q (degree of polymerization) is, for example, 5 or more (e.g., from 10 to 1000), preferably 10 or more (e.g., from 30 to 800), and more preferably 50 or more (e.g., from 100 to 500).

The block copolymer (B) is obtained, for example, by copolycondensation of a polyamide having a reactive terminal group and a polyether having a reactive terminal group.

Examples of the block copolymer (B) include polyether amides and polyether ester amides.

Examples of the polyether amide include block copolymers of a polyamide block having amino groups at both terminals and a polyalkylene glycol block having carboxyl groups at both terminals. Examples of the polyether amide also include block copolymers of a polyamide block having carboxyl groups at both terminals and a polyalkylene glycol block having amino groups at both terminals.

Examples of the polyether ester amide include block copolymers of a polyamide block having carboxyl groups at both terminals and a polyalkylene glycol block having hydroxyl groups at both terminals.

The block copolymer (B) is also referred to as PEBA, nylon elastomer, or the like.

Examples of the block copolymer (B) include VESTAMID (registered trademark) E series (available from Evonik Industries AG), DAIAMID (registered trademark) E series (available from Daicel-Evonik Ltd.), PEBAX (registered trademark) (available from Arkema), and UBESTA XPA (available from UBE Industries, Ltd.).

In the block copolymer (B), a ratio of a weight of the second polyamide to a weight of the polyether is, for example, from 95/5 to 20/80, preferably from 90/10 to 30/70, more preferably from 80/20 to 40/60, and even more preferably from 75/25 to 50/50 (e.g., from 73/27 to 55/45).

The first polyamide (A) may be used alone or in combination of two or more.

The block copolymer (B) preferably has an amino group (free amino group).

The block copolymer (B) may have an amino group at a terminal, or may have an amino group in a branched portion. From the perspective that the amino group easily reacts, the block copolymer (B) preferably has an amino group at a terminal.

An amino group concentration of the block copolymer (B) is preferably 20 mmol/kg or more, more preferably 30 mmol/kg or more, and even more preferably 40 mmol/kg or more.

The amino group concentration of the block copolymer (B) is preferably 120 mmol/kg or less.

A Shore D hardness of the block copolymer (B) is, for example, from 40 to 80, preferably from 45 to 75, and more preferably from 50 to 65.

The Shore D hardness can be measured in accordance with ASTM D2240.

A number average molecular weight of the block copolymer (B) is, for example, from 8000 to 200000, preferably from 9000 to 150000, and more preferably from 10000 to 100000.

From the perspective of further enhancing the adhesion between the resin sheet layer and the rubber layer, the polyether as the soft segment of the block copolymer (B) preferably has an amino group (free amino group).

The reasons for this include the following reasons 1 and 2.

### Reason 1

The soft segment in the block copolymer (B) can move more freely than the hard segment in the block copolymer (B).

Therefore, the free amino group disposed in the soft segment is more reactive than the free amino group disposed in the hard segment, and, as a result, the adhesion between the resin sheet layer and the rubber layer is further enhanced.

### Reason 2

The block copolymer (B) is usually obtained by reacting a polyamide with a polyether having a hydroxyl group or an amino group.

However, the amino group of the polyamide having the amino group does not react with either the hydroxyl group or the amino group.

For the polyamide used in the production of the block copolymer (B), a polyamide in which an amino group is bonded to a carboxylic acid (a carboxylic acid having two or more carboxyl groups) is usually used.

Then, when the polyamide as the hard segment in the block copolymer (B) has amino groups, it is necessary to leave amino groups unreacted with the carboxylic acid in the polyamide used in the production of the block copolymer (B). However, if a large number of amino groups unreacted with the carboxylic acid is left in the polyamide used in the production of the block copolymer (B), the polyamide will become difficult to react with the polyether. Thus, it is difficult to incorporate a large number of free amino groups in the polyamide as the hard segment.

Therefore, the block copolymer (B) containing a large number of amino groups (free amino groups) in the polyether as the soft segment is easier to produce than the block copolymer (B) containing a large number of amino groups (free amino groups) in the polyamide as the hard segment.

Therefore, since the polyether as the soft segment of the block copolymer (B) has amino groups (free amino groups), the adhesion between the resin sheet layer and the rubber layer is further easily enhanced.

A ratio of a weight of the first polyamide (A) to a weight of the block copolymer (B) is from 65/35 to 85/15, preferably from 65/35 to 80/20, more preferably from 65/35 to 75/25, and even more preferably from 70/30 to 75/25.

The thermoplastic resin composition according to the present embodiment contains the first polyamide (A) and the block copolymer (B) in an amount of preferably 50 wt.% or more, more preferably 60 wt.% or more, even more preferably 70 wt.% or more, and still more preferably 80 wt.% or more.

The thermoplastic resin may further contain a resin other than the first polyamide (A) and the block copolymer (B).

Examples of the resin other than the first polyamide (A) and the block copolymer (B) include polyamide-polyester block copolymers, polyamide-polycarbonate block copolymers, polyurethane elastomers, polyester elastomers, polyolefin elastomers, polystyrene elastomers, fluorine-based elastomers, and ethylene-vinyl acetate copolymers.

The thermoplastic resin composition according to the present embodiment may further contain a compound having an amino group (free amino group) in addition to the thermoplastic resin.

Examples of the compound having an amino group include monoamines, polyamines, and polyamide oligomers having an amino group (free amino group).

Examples of the monoamine include aliphatic monoamines, alicyclic monoamines, and aromatic monoamines. Examples of the monoamine include monoamines having from 2 to 24 carbon atoms.

Examples of the polyamine include diamines. Examples of the diamine include aliphatic diamines, alicyclic diamines, and aromatic diamines. Examples of the polyamine include polyalkylene polyamines. Examples of the polyalkylene polyamine include diethylene triamine and triethylene tetramine.

A number average molecular weight of the polyamide oligomer is preferably 10000 or less, more preferably 8000 or less (e.g., from 200 to 7500), even more preferably from 500 to 7000, and still more preferably from 1000 to 5000. The number average molecular weight of the polyamide oligomer may be from 2000 to 6500 (e.g., from 2500 to 6000).

Due to the fact that the number average molecular weight of the polyamide oligomer is 10000 or less, the amino group concentration of the polyamide oligomer is easily increased, and, as a result, the amino group concentration of the thermoplastic resin composition is easily increased by the polyamide oligomer.

An amino group concentration of the compound having an amino group is, for example, from 100 to 4000 mmol/kg, preferably from 120 to 3000 mmol/kg, more preferably from 200 to 2000 mmol/kg, and usually from 150 to 1500 mmol/kg.

The thermoplastic resin composition according to the present embodiment contains the compound having an amino group in an amount of preferably from 0.01 to 20 parts by weight, more preferably from 0.1 to 15 parts by weight, and even more preferably from 0.5 to 10 parts by weight, based on a total of 100 parts by weight of the first polyamide (A) and the block copolymer (B).

The thermoplastic resin composition according to the present embodiment may further contain an additive.

Examples of the additive include fillers, stabilizers (e.g., an ultraviolet absorber, an antioxidant, and a heat stabilizer), colorants, plasticizers, lubricants, flame retardants, and antistatic agents.

Examples of the filler include fibrous fillers and non-fibrous fillers (e.g., a particulate filler and a plate-shaped filler).

Examples of the fibrous filler include organic fibers (e.g., natural fibers), inorganic fibers (e.g., glass fibers, asbestos fibers, carbon fibers, silica fibers, silica-alumina fibers, wollastonite, zirconia fibers, and potassium titanate fibers), and metal fibers.

An average fiber length of the fibrous filler is, for example, from 0.1 to 10 mm, preferably from 0.3 to 7 mm, and more preferably from 0.5 to 5 mm.

Examples of the non-fibrous filler include mineral matter particles (talc, mica, calcined silica, kaolin, sericite, bentonite, smectite, clay, silica, quartz powder, glass beads, glass powder, glass flakes, milled fiber, wollastonite, etc.), boron-containing compounds (boron nitride, boron carbide, titanium boride, etc.), metal carbonate salts (magnesium carbonate, heavy calcium carbonate, light calcium carbonate, etc.), metal silicate salts (calcium silicate, aluminum silicate, magnesium silicate, magnesium aluminosilicate, etc.), metal oxides (magnesium oxide, etc.), metal hydroxides (aluminum hydroxide, calcium hydroxide, magnesium hydroxide, etc.), metal sulfate salts (calcium sulfate, barium sulfate, etc.), metal carbides (silicon carbide, aluminum carbide, titanium carbide, etc.), metal nitrides (aluminum nitride, silicon nitride, titanium nitride, etc.), white carbon, and metal foils.

An average fiber size of the non-fibrous filler is, for example, from 0.1 to 50 µm, preferably from 0.5 to 30 µm, and more preferably from 1 to 10 µm.

When the thermoplastic resin composition according to the present embodiment contains the additive, a content thereof is preferably 50 parts by weight or less (e.g., from 0.01 to 40 parts by weight), more preferably 30 parts by weight or less (e.g., from 0.1 to 25 parts by weight), and even more preferably 20 parts by weight or less (e.g., from 1 to 18 parts by weight), based on a total of 100 parts by weight of the first polyamide (A) and the block copolymer (B).

From the perspective of enhancing the adhesion between the resin sheet layer and the rubber layer, the amino group concentration of the thermoplastic resin composition according to the present embodiment is 20 mmol/kg or more, preferably 40 mmol/kg or more, and more preferably 70 mmol/kg or more.

In addition, from the perspective of suppressing yellowing of the resin sheet, the amino group concentration of the thermoplastic resin composition according to the present embodiment is preferably 120 mmol/kg or less.

The bending modulus of elasticity, according to ISO178, of the thermoplastic resin composition according to the present embodiment is preferably from 1000 to 1200 MPa, and more preferably 1030 to 1200 MPa.

### Resin sheet

The resin sheet according to the present embodiment is obtained by molding the thermoplastic resin composition according to the present embodiment.

The resin sheet according to the present embodiment can be produced from the thermoplastic resin composition by a known method. Examples of a method for molding the resin sheet include extrusion molding, injection molding, and a solution casting method.

A thickness of the resin sheet according to the present embodiment is not particularly limited, and is, for example, 2 mm or less (e.g., from 0.05 to 1.5 mm), preferably from 0.07 to 1 mm, and more preferably from 0.1 to 0.7 mm. The thickness of the resin sheet according to the present embodiment is usually from 0.15 to 0.8 mm (e.g., from 0.2 to 0.75 mm).

### Laminated sheet

The laminated sheet according to the present embodiment is a laminated sheet in which a resin sheet layer formed of the resin sheet according to the present embodiment and a rubber layer formed of rubber are laminated.

The resin sheet layer and the rubber layer are cross-linked and adhered to each other.

The laminated sheet according to the present embodiment may have a laminated structure in which the rubber layer, the resin sheet layer, and a thermoplastic elastomer layer formed of a thermoplastic elastomer are laminated in this order.

The laminated sheet according to the present embodiment is used in the manufacture of a shoe sole.

The shoe sole includes a shoe sole body and a stud. The rubber layer serves as the stud. The thermoplastic elastomer layer serves as the shoe sole body.

### Rubber layer

The rubber layer is a layer in which an uncross-linked rubber composition containing an uncross-linked rubber is cross-linked.

Examples of the uncross-linked rubber include diene-based rubber, olefinic rubber, acrylic rubber, fluororubber, silicone rubber, epichlorohydrin rubber, chlorosulfonated polyethylene, propylene oxide rubber, ethylene-vinyl acetate copolymers (EAMs), and polynorbornene rubber. In addition, examples of the uncross-linked rubber include modified rubbers (acid-modified rubbers and the like) obtained by modifying the exemplified rubbers. These rubbers can be used alone or in combination of two or more.

Examples of the diene-based rubber include homopolymers of a diene-based monomer, acrylonitrile-diene copolymers, and styrene-diene copolymers.

Examples of the homopolymer of the diene-based monomer include natural rubber (NR), isoprene rubber (IR), isobutylene isoprene rubber (butyl rubber) (IIR), butadiene rubber (BR), and chloroprene rubber (CR).

Examples of the acrylonitrile-diene copolymer include acrylonitrile-butadiene rubber (nitrile rubber) (NBR), nitrile chloroprene rubber (NCR) and nitrile isoprene rubber (NIR). Examples of the styrene-diene copolymer include styrene butadiene rubber (SBR) (e.g., a random copolymer of styrene and butadiene, and an SB block copolymer constituted by a styrene block and a butadiene block), styrene chloroprene rubber (SCR), and styrene isoprene rubber (SIR).

The diene-based rubber is a concept that includes a hydrogenated rubber (e.g., hydrogenated nitrile rubber (HNBR)).

Examples of the olefinic rubber include ethylene propylene rubber (EPM), ethylene-propylene-diene rubber (EPDM), and polyoctenylene rubber.

Examples of the acrylic rubber include rubbers containing an alkyl acrylate ester as a constituent unit, and ethylene acrylic rubber.

Examples of the rubber containing an alkyl acrylate ester as a constituent unit include copolymers (ACM) of an alkyl acrylate ester and a chlorine-containing crosslinkable monomer; copolymers (ANM) of an alkyl acrylate ester and an acrylonitrile; and copolymers of an alkyl acrylate ester and a monomer containing a carboxyl group and/or an epoxy group.

The fluororubber is a rubber containing a fluorine-containing monomer as a constituent unit.

Examples of the fluororubber include copolymers (FKM) of vinylidene fluoride and perfluoropropene; copolymers of tetrafluoroethylene and propylene; and copolymers (FFKM) of tetrafluoroethylene and perfluoromethyl vinyl ether.

The FKM may contain tetrafluoroethylene as a constituent unit.

Examples of the silicone rubber include methyl silicone rubber (MQ), vinyl silicone rubber (VMQ), phenyl silicone rubber (PMQ), phenyl vinyl silicone rubber (PVMQ), and fluorosilicone rubber (FVMQ).

Examples of the modified rubber include acid-modified rubbers.

Examples of the acid-modified rubber include rubbers having a carboxyl group or an acid anhydride group.

Examples of the rubber having a carboxyl group or an acid anhydride group include carboxylated styrene butadiene rubber (X-SBR), acid-modified nitrile rubber, and carboxylated ethylene propylene rubber (X-EPM).

Examples of the acid-modified nitrile rubber include carboxylated nitrile rubber (X-NBR).

A total content of NBR, X-NBR, H-NBR, acrylic rubber, FKM, and EPDM in the uncross-linked rubber composition is preferably 30 wt.% or more.

The uncross-linked rubber composition may contain a cross-linker.

Examples of the cross-linker include radical generators, sulfur-based vulcanizers, oxime-based cross-linkers, resin-based cross-linkers, fatty acid salts, and metal salts.

The cross-linker may be used alone or in combination of two or more.

Examples of the radical generator include organic peroxides, azo compounds, and sulfur-containing organic compounds.

Examples of the sulfur-based vulcanizer include sulfur (e.g., powdered sulfur, precipitated sulfur, colloidal sulfur, insoluble sulfur, and highly dispersible sulfur), sulfur chloride (e.g., sulfur monochloride and sulfur dichloride), surface-treated sulfur, alkylphenol disulfide, and morpholine disulfide.

Examples of the oxime-based cross-linker include p-quinonedioxime and p,p'-dibenzoylquinonedioxime.

Examples of the resin-based cross-linker include an alkylphenol-formaldehyde resin, a sulfide-p-tert-butylphenol resin, and a hexamethoxymethyl-melamine resin.

Examples of the fatty acid salt include potassium laurate and sodium coconut fatty acid.

Examples of the metal salt include zinc oxide and zinc peroxide.

Examples of the organic peroxide include hydroperoxides, dialkyl peroxides, diacyl peroxides, di(alkylperoxy)alkanes, di(alkylperoxy)cycloalkanes, di(alkylperoxyalkyl)arenes, di(alkylperoxy)alkynes, di(acylperoxy)alkanes, peracid esters, ketone peroxides, and peroxycarbonates.

Examples of the hydroperoxide include alkyl hydroperoxides (e.g., t-butyl hydroperoxide) and alkane dihydroperoxides (e.g., cumene hydroperoxide).

Examples of the dialkyl peroxide include di C1-10 alkyl peroxide (e.g., di-t-butyl peroxide), diaralkyl peroxide (e.g., dicumyl peroxide), and alkyl-aralkyl peroxide (e.g., t-butyl-cumyl peroxide).

Examples of the diacyl peroxide include dialkanoyl peroxide (e.g., di C1-18 alkanoyl peroxide) and diaroyl peroxide (e.g., di C7-12 aroyl peroxide). Examples of the dialkanoyl peroxide include diacetyl peroxide and lauroyl peroxide. Examples of the diaroyl peroxide include benzoyl peroxide, 4-chlorobenzoyl peroxide, 2,4-dichlorobenzoyl peroxide, benzoyltoluyl peroxide, and toluyl peroxide.

Examples of the di(alkylperoxy)alkane include di(C1-10 alkylperoxy)C1-10 alkane. Examples of the di(C1-10 alkylperoxy)C1-10 alkane include 2,2-di(t-butylperoxy)butane and 2,5-dimethyl-2,5-di(t-butylperoxy)hexane.

Examples of the di(alkylperoxy)cycloalkane include di(C1-10 alkylperoxy)C5-10 cycloalkane. Examples of the di(C1-10 alkylperoxy)C5-10 cycloalkane include 1,1-bis(t-butylperoxy)cyclohexane, and 1,1-bis(t-butylperoxy)-3,3,5-trimethylcyclohexane.

Examples of the di(alkylperoxyalkyl)arene include di(C1-10 alkylperoxy C1-4 alkyl)C6-10 arene. Examples of the di(C 1 -10 alkylperoxy C1-4 alkyl)C6-10 arene include 1,3-bis(t-butylperoxyisopropyl)benzene.

Examples of the di(alkylperoxy)alkyne include 2,5-dimethyl-2,5-di(t-butylperoxy)hexyne-3.

Examples of the di(acylperoxy)alkane include 2,5-dimethyl-2,5-dibenzoylperoxyhexane.

Examples of the peracid ester include peracid alkyl esters and alkyl perarenecarboxylate esters (e.g., C1-6 alkyl esters). Examples of the peracid alkyl ester include alkyl peralkanoate esters (C1-18 peralkanoic acid C1-6 alkyl ester). Examples of the alkyl peralkanoate ester include t-butyl peracetate, t-butyl peroxyoctoate, and t-butyl peroxydecanoate. Examples of the alkyl perarenecarboxylate ester include t-butyl peroxybenzoate and di-t-butyl peroxy(iso)phthalate.

Examples of the azo compound include azonitrile compounds, azoamide compounds, azoamidine compounds, and azoalkane compounds.

Examples of the azonitrile compound include 2,2'-azobis(2,4-dimethylvaleronitrile), 2,2'-azobis(isobutyronitrile), 2,2'-azobis(2-methylbutyronitrile), and 2,2'-azobis(4-methoxy-2,4-dimethylvaleronitrile). Examples of the azoamide compound include 2,2'-azobis{2-methyl-N-[1,1-bis(hydroxymethyl)-2-hydroxyethyl]propionamide}.

Examples of the azoamidine compound include 2,2'-azobis(2-amidinopropane)dihydrochloride and 2,2'-azobis[2-(2-imidazolin-2-yl)propane]dihydrochloride.

Examples of the azoalkane compound include 2,2'-azobis(2,4,4-trimethylpentane) and 4,4'-azobis(4-cyanopentanoic acid).

Examples of the sulfur-containing organic compound include thiurams, dithiocarbamate salts, and thiazoles.

Examples of the thiuram include tetramethylthiuram monosulfide (TMTM), tetramethylthiuram disulfide (TMTD), tetraethylthiuram disulfide (TETD), tetrabutylthiuram disulfide (TBTD), and dipentamethylenethiuram tetrasulfide (DPTT).

Examples of the dithiocarbamate salt include salts of di C1-4 alkyldithiocarbamic acids. Examples of the di C1-4 alkyldithiocarbamic acid include dimethyldithiocarbamic acid and diethyldithiocarbamic acid. Examples of the salt of the di C1-4 alkyldithiocarbamic acid include salts with sodium, potassium, iron, copper, zinc, selenium, or tellurium.

Examples of the thiazole include 2-mercaptobenzothiazole and 2-(4'-morpholinodithio)benzothiazole.

The sulfur-containing organic compound may be used in combination with sulfur, or may be used as a sulfur-free cross-linker without being combined with sulfur.

For the cross-linker, a radical generator is preferable. For the radical generator, an organic peroxide is preferable from the perspective of enhancing the adhesion between the resin sheet layer and the rubber layer.

In addition, the organic peroxide is preferable because the organic peroxide hardly colors the rubber layer and hardly deteriorates the physical properties of the rubber layer as compared with the sulfur-based vulcanizer and the sulfur-containing organic compound.

The uncross-linked rubber composition contains the cross-linker in an amount of, for example, from 0.1 to 20 parts by weight, preferably from 0.3 to 15 parts by weight, more preferably from 0.5 to 10 parts by weight, and particularly preferably from 1 to 8 parts by weight, based on 100 parts by weight of the uncross-linked rubber.

The uncross-linked rubber composition may contain a cross-linking aid.

Examples of the cross-linking aid include vinyl-based monomers (e.g., divinylbenzene), allyl-based monomers (e.g., diallyl phthalate, triallyl phosphate, triallyl (iso)cyanurate, and triallyl trimellitate), (meth)acrylic monomers, maleimide-based compounds, di(meth)acrylic acid metal salts (e.g., zinc salts and magnesium salts), ammonia derivatives, and carbon disulfide derivatives. These cross-linking aids can be used alone or in combination of two or more.

Examples of the (meth)acrylic monomer include difunctional (meth)acrylates having two (meth)acryloyl groups and polyfunctional (meth)acrylates having three or more (meth)acryloyl groups.

Examples of the difunctional (meth)acrylate include C2-10 alkylene glycol di(meth)acrylate, poly C2-4 alkylene glycol di(meth)acrylate, glycerin di(meth)acrylate, trimethylolpropane (meth)acrylate, and pentaerythritol di(meth)acrylate. Also, examples of the difunctional (meth)acrylate include di(meth)acrylates of C2-4 alkyleneoxide adducts of bisphenol A.

Examples of the C2-10 alkylene glycol di(meth)acrylate include ethylene glycol di(meth)acrylate, propylene glycol di(meth)acrylate, and 1,4-butanediol di(meth)acrylate.

Examples of the poly C2-4 alkylene glycol di(meth)acrylate include diethylene glycol di(meth)acrylate, polyethylene glycol di(meth)acrylate, dipropylene glycol di(meth)acrylate, and polytetramethylene glycol di(meth)acrylate.

Examples of the polyfunctional (meth)acrylate include glycerin tri(meth)acrylate, trimethylolethane tri(meth)acrylate, trimethylolpropane tri(meth)acrylate, pentaerythritol tri(meth)acrylate, pentaerythritol tetra(meth)acrylate, and dipentaerythritol tetra(meth)acrylate.

Examples of the maleimide-based compound include aromatic bismaleimides and aliphatic bismaleimides.

Examples of the aromatic bismaleimide include N,N'-1,3-phenylenedimaleimide, N,N'-1,4-phenylenedimaleimide, N,N'-3-methyl-1,4-phenylenedimaleimide, 4,4'-bis(N,N'-maleimide)diphenylmethane, 4,4'-bis(N,N'-maleimide)diphenyl sulfone, and 4,4'-bis(N,N'-maleimide)diphenyl ether.

Examples of the aliphatic bismaleimide include N,N'-1,2-ethylene bismaleimide, N,N'-1,3-propylene bismaleimide, and N,N'-1,4-tetramethylene bismaleimide.

Examples of the ammonia derivative include aldehyde-ammonias (e.g., hexamethylenetetramine, acetaldehyde-ammonia, and ethyl chloride-formaldehyde-ammonia reaction products), aldehyde-amines (e.g., n-butyraldehyde-aniline reaction products, and butyraldehyde-acetaldehyde-butylideneaniline reaction products), and guanidines (e.g., N,N-diphenylguanidine, diorthotolylguanidine, and orthotolylbiguanide).

Examples of the carbon disulfide derivative include thioureas, dithiocarbamate salts, thiazoles, sulfenamides, and xanthogenate salts.

Examples of the thiourea include thiocarboanilide, diorthotolyl thiourea, ethylene thiourea, dimethyl thiourea, and trimethyl thiourea.

Examples of the dithiocarbamate salt include salts of di C1-4 alkyldithiocarbamic acid (e.g., dimethyldithiocarbamic acid and diethyldithiocarbamic acid) with sodium, potassium, iron, copper, zinc, selenium or tellurium.

Examples of the thiazole include 2-mercaptobenzothiazole (MBT), salts of 2-mercaptobenzothiazole, dibenzothiazyl disulfide, and 2-(4'-morpholinodithio)benzothiazole. Examples of the salt of 2-mercaptobenzothiazole include salts with metals (e.g., zinc and sodium) and salts with amines (e.g., cyclohexylamine).

Examples of the sulfenamide include N-cyclohexyl-2-benzothiazole sulfenamide, N-t-butyl-2-benzothiazole sulfenamide, N-oxyethylene-2-benzothiazole sulfenamide, N,N'-diisopropyl-2-benzothiazole sulfenamide, and N-cyclohexyl-1,2-benzothiazoyl sulfenamide.

Examples of the xanthogenate salt include salts of alkyl xanthogenic acids (e.g., isopropyl xanthogenic acid and butyl xanthogenic acid). Examples of the salt of alkyl xanthogenic acid include salts with metals (e.g., zinc and sodium).

When the cross-linker is a radical generator, the cross-linking aid is preferably a vinyl-based monomer, an allyl-based monomer, a (meth)acrylic monomer, or a maleimide-based compound.

The uncross-linked rubber composition contains the cross-linking aid in an amount of, for example, from 0.1 to 15 parts by weight, preferably from 0.2 to 10 parts by weight, and more preferably from 0.3 to 5 parts by weight, based on 100 parts by weight of the uncross-linked rubber.

Also, the uncross-linked rubber composition contains the cross-linking aid in an amount of from 0.01 to 10 parts by weight, preferably from 0.05 to 5 parts by weight, and more preferably from 0.1 to 4 parts by weight, based on 100 parts by weight of the cross-linker.

The uncross-linked rubber composition may further contain an additive.

Examples of the additive include fillers, softeners, plasticizers, co-cross-linkers, antiaging agents, tackifiers, processing aids, lubricants, flame retardants, antistatic agents, and colorants. These additives may be used alone or in combination of two or more.

Examples of the filler include particulate fillers and fibrous fillers. Examples of the particulate filler include mica, clay, talc, silica, calcium carbonate, magnesium carbonate, carbon black, white carbon, and ferrite. Examples of the fibrous filler include organic fibers and inorganic fibers. Examples of the organic fiber include rayon fibers, nylon fibers, vinylon fibers, and aramid fibers. Examples of the inorganic fiber include carbon fibers and glass fibers.

Examples of the softener include vegetable oils (e.g., linoleic acid, oleic acid, castor oil, and palm oil) and mineral oils (e.g., paraffin, process oil, and extenders).

Examples of the plasticizer include phthalate esters, aliphatic dicarboxylate esters, sulfur-containing plasticizers, and polyester-based polymer plasticizers.

Examples of the co-cross-linker include metal oxides (e.g., zinc oxide and titanium oxide).

Examples of the antiaging agent include anti-heat aging agents, antiozonants, antioxidants, and ultraviolet absorbers.

Examples of the lubricant include stearic acid, metal stearate salt, and wax.

A thickness of the rubber layer is, for example, from 1 to 30 mm, preferably from 2 to 20 mm, and more preferably from 3 to 15 mm.

A thickness of the cross-linked rubber layer may be selected in accordance with the intended use of shoes.

When the rubber layer serves as a stud of running shoes, the rubber layer has a thickness of, for example, from 2.0 to 3.5 mm. When the rubber layer serves as a stud of soccer shoes, the rubber layer has a thickness of, for example, from 10 to 20 mm.

A ratio of the thickness of the rubber layer to the thickness of the resin sheet layer is, for example, from 100/1 to 1/1, preferably from 90/1 to 2/1, and more preferably from 80/1 to 3/1, and may be from 75/1 to 4/1 (e.g., from 70/1 to 5/1).

The Akron abrasion loss of the rubber layer is, for example, 200 mm³ or less (e.g., from 0 to 150 mm³), preferably 100 mm³ or less (e.g., from 0. 1 to 90 mm³), more preferably 80 mm³ or less (e.g., from 0.5 to 75 mm³), and even more preferably 70 mm³ or less (e.g., from 1 to 60 mm³), and may be from 1 to 50 mm³ (e.g., from 2 to 40 mm³) from the perspective of forming the stud.

The Akron abrasion loss can be measured, for example, by the Akron abrasion method B as an abrasion volume per 1000 rotations at a load of 27 N, an inclination angle of 10 degrees, and a rotation speed of 75 rpm.

A Shore A hardness of the rubber layer is, for example, from 30 to 80, preferably from 35 to 70, and more preferably from 40 to 60.

The Shore A hardness can be measured in accordance with ASTM D2240.

The rubber layer serves as a stud of the shoe sole.

Therefore, the shape of the rubber layer can be selected according to the desired shape of the stud. The rubber layer may be formed wholly or partially on one surface of the resin sheet.

The rubber layer is directly cross-linked and adhered to the resin sheet on one surface of the resin sheet without another layer interposed therebetween.

### Thermoplastic elastomer layer

The thermoplastic elastomer layer is formed of a thermoplastic elastomer composition containing a thermoplastic elastomer.

Examples of the thermoplastic elastomer include polyurethane elastomers, polyamide elastomers, polyester elastomers, polyolefin elastomers, polystyrene elastomers, fluorine-based elastomers, and ethylene-vinyl acetate copolymers. These thermoplastic elastomers may be used alone or in combination of two or more.

The polyurethane elastomer is usually a polyurethane block copolymer containing a hard segment and a soft segment.

Examples of the hard segment include polyurethanes.

Examples of the soft segment include polyether blocks and polyester blocks (e.g., an aliphatic polyester block).

Examples of the polyurethane elastomer include polyester urethane elastomers, polyester ether urethane elastomers, polyether urethane elastomers, and polycarbonate urethane elastomers.

The polyurethane elastomer is preferably a polyester urethane elastomer, a polyester ether urethane elastomer, or a polyether urethane elastomer.

In the polyurethane elastomer, a number average molecular weight of the soft segment is, for example, from 100 to 10000, preferably from 300 to 6000 (e.g., from 300 to 5000), and more preferably from 500 to 4000 (e.g., from 500 to 3000), and may be from 1000 to 4000.

The polyamide elastomer is usually a polyamide block copolymer containing a hard segment and a soft segment.

Examples of the hard segment include polyamides.

Examples of the soft segment include polyether blocks and polyester blocks.

Examples of the polyamide elastomer include polyamide-polyether block copolymers, polyamide-polyester block copolymers, and polyamide-polycarbonate block copolymers.

From the perspective of adhesion, the thermoplastic elastomer is preferably a polyurethane elastomer or a polyamide elastomer, and particularly preferably a polyurethane elastomer.

A total amount of the polyurethane elastomer and the polyamide elastomer in the thermoplastic elastomer is, for example, 30 wt.% or more (e.g., from 40 to 100 wt.%), preferably 50 wt.% or more (e.g., from 60 to 100 wt.%), and more preferably 70 wt.% or more (e.g., from 80 to 100 wt.%).

The thermoplastic elastomer composition may further contain an additive.

Examples of the additive include stabilizers (e.g., a heat stabilizer, an ultraviolet absorber, and an antioxidant), plasticizers, lubricants, fillers, colorants, flame retardants, and antistatic agents. These additives may be used alone or in combination of two or more.

The bending modulus of elasticity, according to ISO178, of the thermoplastic resin composition according to the present embodiment may be, for example, less than 600 MPa (e.g., from 20 to 550 MPa), preferably less than 500 MPa (e.g., from 30 to 480 MPa), more preferably 450 MPa or less (e.g., from 50 to 420 MPa), and particularly preferably 400 MPa or less (e.g., from 80 to 400 MPa), and may be from 100 to 500 MPa (e.g., from 120 to 450 MPa, and more specifically from 130 to 400 MPa).

The thermoplastic elastomer layer has a thickness of, for example, from 1 to 30 mm, preferably from 2 to 20 mm, and more preferably from 3 to 15 mm.

A ratio of the thickness of the thermoplastic elastomer layer to the thickness of the resin sheet layer is, for example, from 100/1 to 1/1, preferably from 80/1 to 1.5/1, and more preferably from 50/1 to 2/1, and may be from 30/1 to 2/1 (e.g., from 20/1 to 2.5/1).

A ratio of the thickness of the thermoplastic elastomer layer to the thickness of the rubber layer is, for example, from 10/1 to 0.01/1, preferably from 5/1 to 0.03/1, and more preferably from 4/1 to 0.05/1, and may be from 3/1 to 0.05/1 (e.g., from 2/1 to 0.07/1).

A Shore D hardness of the thermoplastic elastomer layer is, for example, from 40 to 100, preferably from 45 to 90, and more preferably from 50 to 80, and may be from 50 to 70.

The Shore D hardness can be measured in accordance with ASTM D2240.

The thermoplastic elastomer layer serves as a shoe sole body of the shoe sole.

Therefore, the shape of the thermoplastic elastomer layer can be selected according to the desired shape of the shoe sole body.

The thermoplastic elastomer layer may be formed wholly or partially on the other surface of the resin sheet.

The thermoplastic elastomer layer is directly cross-linked and adhered to the resin sheet on the other surface of the resin sheet (the surface opposite to the surface on which the rubber layer is formed) without another layer interposed therebetween.

### Method for manufacturing laminated sheet

In the method for manufacturing a laminated sheet according to the present embodiment, a rubber layer is directly formed on one surface of the resin sheet according to the present embodiment, and thus a laminated sheet in which the rubber layer and the resin sheet layer are laminated can be produced.

Further, in the present embodiment, a laminated sheet having a laminated structure in which the rubber layer, the resin sheet layer, and a thermoplastic elastomer layer are laminated in this order may be manufactured by directly forming the thermoplastic elastomer layer on the other surface of the resin sheet.

The thermoplastic elastomer layer may be formed before the rubber layer is formed.

In the method for manufacturing a laminated sheet according to the present embodiment, a rubber layer can be directly formed on one surface of the resin sheet by bringing the resin sheet and a molten uncross-linked rubber composition into contact with each other and cross-linking them.

At the time of cross-linking, deformation of the resin sheet can be suppressed by suppressing melting of the resin sheet.

In the method for manufacturing a laminated sheet according to the present embodiment, the rubber layer can be formed by a general-purpose molding method (e.g., extrusion molding, injection molding, press molding, or transfer molding).

For example, the rubber layer is formed by bringing a molten uncross-linked rubber composition into contact with one surface of the resin sheet placed in a mold and cross-linking the uncross-linked rubber composition and the resin sheet.

The resin sheet and the uncross-linked rubber composition may be brought into contact with each other under pressure.

For pressurization, hot press molding, injection molding, or the like may be used, or pressure molding may be performed under a reduced pressure atmosphere.

A cross-linking temperature is preferably from 170°C to 230°C, more preferably from 175°C to 210°C, and even more preferably from 180°C to 190°C.

In the method for manufacturing a laminated sheet according to the present embodiment, the thermoplastic elastomer layer can be directly formed on the other surface of the resin sheet by bringing the resin sheet and the molten thermoplastic elastomer into contact with each other.

In the method for manufacturing a laminated sheet according to the present embodiment, the thermoplastic elastomer layer can be formed by a general-purpose molding method (e.g., extrusion molding, injection molding, compression molding, transfer molding, laser welding, or high-frequency welding).

A melting temperature of the thermoplastic elastomer is, for example, from 120 to 280°C, preferably from 150 to 260°C, and more preferably from 180 to 250°C.

The thermoplastic resin composition according to the present embodiment is configured as described above, and thus has the following advantages.

That is, the thermoplastic resin composition according to the present embodiment is used for molding the resin sheet.

The resin sheet is a resin sheet to be used in cross-linking adhesion with rubber.

The thermoplastic resin composition according to the present embodiment contains a thermoplastic resin.

The thermoplastic resin includes a first polyamide (A) having a melting point of from 180°C to 230°C and a block copolymer (B) containing a second polyamide and a polyether.

The ratio of the weight of the first polyamide (A) to the weight of the block copolymer (B) is from 65/35 to 85/15.

The amino group concentration of the thermoplastic resin composition according to the present embodiment is 20 mmol/kg or more, and thus the cross-linking reaction between the resin sheet and the rubber easily occurs, and, as a result, the adhesion between the resin sheet layer and the rubber layer is improved.

In the thermoplastic resin composition according to the present embodiment, the resin sheet has flexibility due to the polyether serving as the soft segment in the block copolymer (B), and the steady contact between the resin sheet and the rubber is increased at the time of cross-linking. In addition, compatibility between the block copolymer (B) and the first polyamide (A) is enhanced by the second polyamide serving as the hard segment in the block copolymer (B), and the steady contact between the resin sheet and the rubber is further enhanced at the time of cross-linking. As a result, the amino group in the thermoplastic resin composition easily reacts with the rubber, and the adhesion between the resin sheet layer and the rubber layer is improved.

In the thermoplastic resin composition according to the present embodiment, the ratio being 85/15 or less, i.e., a high content proportion of the block copolymer (B) containing the second polyamide and the polyether, further improves the adhesion between the resin sheet layer and the rubber layer.

In addition, in the thermoplastic resin composition according to the present embodiment, the flexibility of the resin sheet enhances the steady contact between the resin sheet and an adherend even when the adherend is adhered to the surface of the resin sheet opposite to the surface on which the rubber layer is formed. As a result, the adhesion between the resin sheet and the adherend is improved.

In the thermoplastic resin composition according to the present embodiment, the ratio being 85/15 or less further improves the adhesion between the resin sheet and the adherend.

Furthermore, the thermoplastic resin composition according to the present embodiment has an advantage in that shoes including the resin sheet can be provided with appropriate wearing comfort due to the flexibility of the resin sheet.

In addition, the thermoplastic resin composition according to the present embodiment has an advantage in that the ratio being 85/15 or less can further impart appropriate wearing comfort to shoes including the resin sheet.

In addition, in the thermoplastic resin composition according to the present embodiment, due to the ratio being 65/35 or more, i.e., a high content proportion of the first polyamide (A) having a high melting point of 180°C or higher, the resin sheet is hardly deformed even when heating is performed at a high temperature (e.g., 170°C or higher) for causing a cross-linking reaction between the resin sheet and the rubber, resulting in suppression of deformation of the laminated sheet of the resin sheet layer and the rubber layer.

In addition, in the thermoplastic resin composition according to the present embodiment, due to the ratio being 65/35 or more, i.e., a high content proportion of the first polyamide (A) having a high melting point of 180°C or higher, the effect of improving the heat resistance by the first polyamide (A) is sufficiently exhibited, and, when the thermoplastic resin composition is molten and a resin sheet is molded (e.g., a melt extrusion method), an excessive decrease in viscosity of the thermoplastic resin composition can be suppressed, and, as a result, a resin sheet having the desired shape can be easily obtained.

Furthermore, in the thermoplastic resin composition according to the present embodiment, a volume proportion of the first polyamide (A) is likely to be larger than a volume proportion of the block copolymer (B) due to the ratio being 65/35 or more, and thus the resin sheet is easily molded.

In addition, due to the ratio being from 65/35 to 85/15, the thermoplastic resin composition is likely to have a bending modulus of elasticity (e.g., from 1000 to 1200 MPa) preferable as that of a material for a shoe sole.

Accordingly, the present embodiment can provide a thermoplastic resin composition which prevents a resin sheet from being deformed even at a high cross-linking temperature, which provides excellent adhesion between a resin sheet layer and a rubber layer, and also which provides excellent moldability at the time of producing the resin sheet.

The thermoplastic resin composition, the resin sheet, and the laminated sheet according to the present embodiment are a thermoplastic resin composition, a resin sheet, and a laminated sheet to be used in the manufacture of shoe sole. However, the thermoplastic resin composition, the resin sheet, and the laminated sheet according to the present disclosure may be used in other intended uses.

For example, the laminated sheet can be used as a non-slip sheet or a vibration-proof sheet. For example, a tape-shaped non-slip sheet can be used by being wound around a lot (e.g., a fishing rod). In addition, the vibration-proof sheet can be used as a sheet to be attached to a vibration-proof table on which a device (e.g., an electric fan) driven by a motor is placed.

### Examples

Next, the present disclosure will be described more specifically with reference to an example and comparative examples. Note that the present disclosure is not to be considered limited to these examples at all.

### Production of resin sheet

Thermoplastic resin compositions were produced by melting the following materials in the blending proportions indicated in Tables 1 and 2, and resin sheets (0.3 mm thick) were produced from the thermoplastic resin compositions by a melt extrusion method.

### Polyamide

· PA612 (polyamide 612) (trade name: Z7093, available from Daicel-Evonik Ltd.)
· PA612 (polyamide 612) (trade name: D18, available from Daicel-Evonik Ltd.)
· PA610 (polyamide 610) (trade name: HS18, available from Daicel-Evonik Ltd.)
· PA12 (polyamide 610) (trade name: ZL9500, available from Daicel-Evonik Ltd.)

### Block copolymer

· PEBA (a multiblock copolymer containing polyamide 12 as a hard segment and a polyether as a soft segment) (trade name: E58-K2, available from Daicel-Evonik Ltd.) (the polyether as the soft segment containing amino groups (free amino groups))
· PEBA (a multiblock copolymer containing polyamide 12 as a hard segment and a polyether as a soft segment) (trade name: E58-S4, available from Daicel-Evonik Ltd.)
· PEBA (a multiblock copolymer containing polyamide 12 as a hard segment and a polyether as a soft segment) (trade name: E55-S4, available from Daicel-Evonik Ltd.)

### Melting point of each material

The melting point of each material was measured by the method described above.

The melting points are indicated in Tables 1 and 2.

### Amino group concentration

The amino group concentration of each material was measured by the method described above.

In addition, the amino group concentration of the thermoplastic resin composition was obtained by calculation from the amino group concentration of each material and the blending proportion.

The amino group concentrations (NH₂ concentrations) are indicated in Tables 1 and 2.

### Bending modulus of elasticity of thermoplastic resin composition

The bending moduli of elasticity of the thermoplastic resin compositions were measured according to ISO178.

The bending moduli of elasticity are indicated in Tables 1 and 2.

### Evaluation of moldability

Concerning the moldability of the resin sheets, the resin sheets were observed, and their moldability was evaluated based on the following criteria.

Good: A fair resin sheet was obtained.

Marginal: The resin sheet had a portion having a wavy shape.

Poor: No resin sheet was obtained.

The results are indicated in Tables 1 and 2 below.

### Production of uncross-linked rubber composition

An uncross-linked rubber composition was obtained by mixing the following materials in the following blending proportion.
· X-NBR (carboxylated nitrile rubber) as an uncross-linked rubber (modified rubber): 100 parts by weight
· Precipitated silica (trade name: Vulkasil C, available from Bayer AG) as a reinforcing agent: 30 parts by weight
· Titanium oxide as a co-cross-linker: 3 parts by weight
· Plasticizer (trade name: Vulkanol 88, available from Bayer AG) 88: 30 parts by weight
· Stearic acid as a lubricant: 1 part by weight
· A mixture of N,N-dimethylbenzylamine (BDMA) as a solvent and triallyl (iso)cyanurate (trade name: TAIC, available from Mitsubishi Chemical Corporation) as a cross-linking aid (allyl-based monomer): 0.8 parts by weight
· "Trigonox 17/40" as a cross-linker (organic peroxide): 5 parts by weight

### Production of laminated sheet

A laminated sheet was produced using a transfer molding press machine, the resin sheet, and the uncross-linked rubber composition.

Specifically, first, the mold (upper mold and lower mold) of the transfer molding press machine was heated to the cross-linking temperature (170°C). Next, a resin sheet (10 cm × 10 cm × 0.3 mm) was placed in the mold; a plate-shaped mold (through-holes: 128 places) (mold in FIG. 1) was placed on the resin sheet; the mold was quickly closed; the uncross-linked rubber composition was injected into the mold; the uncross-linked rubber composition was cross-linked by heating the inside of the mold at a cross-linking temperature (170°C) for a cross-linking time (10 minutes); and thus a laminated sheet having a plurality of rubber layers formed in the plane direction of the resin sheet layer was obtained (if the rubber layers were formed according to the shape of the plate-shaped mold, the number of the rubber layers would be 128). The production of a laminated sheet was repeated five times.

The cross-linking temperature was set to 180°C, the cross-linking time was set to 7 minutes, and the production of a laminated sheet was repeated five times.

In Comparative Example 6, no resin sheet was obtained, and, therefore, no laminated sheet was produced.

### Evaluation of deformability

Concerning the deformability of the resin sheets by heating for cross-linking, the resin sheet layers in the laminated sheets were observed, and their deformability was evaluated based on the following criteria.

Good: No deformation was observed in the resin sheet layer.

Marginal: In the resin sheet layer, deformation was observed at a place where the rubber layer was not adhered, but no deformation was observed in a back surface portion at a place where the rubber layer was adhered.

Poor: In the resin sheet layer, deformation was observed at a place where the rubber layer was not adhered, and deformation was also observed even in a back surface portion at a place where the rubber layer was adhered.

The results are indicated in Tables 1 and 2 below.

### Evaluation of adhesion

Concerning the adhesion between the resin sheet layer and the rubber layer in the laminated sheets, the laminated sheets were observed, and the adhesion was evaluated based on the following criteria.

Good: No rubber layer was detached from the resin sheet layer, and 128 rubber layers were formed on the resin sheet layer.

Marginal: One to nine rubber layers were detached from the resin sheet layer.

Poor: Ten or more rubber layers were detached from the resin sheet layer.

The results are indicated in Tables 1 and 2 below.

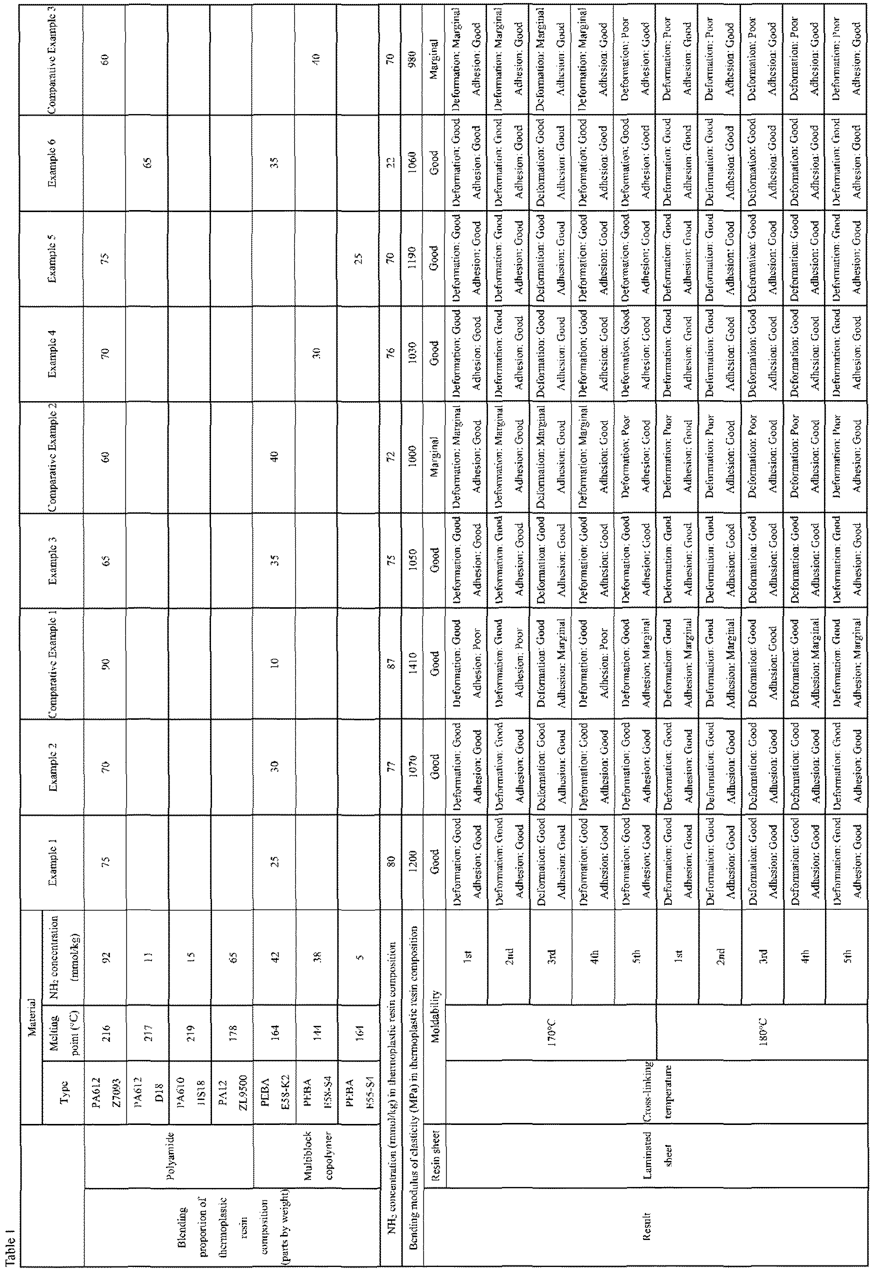

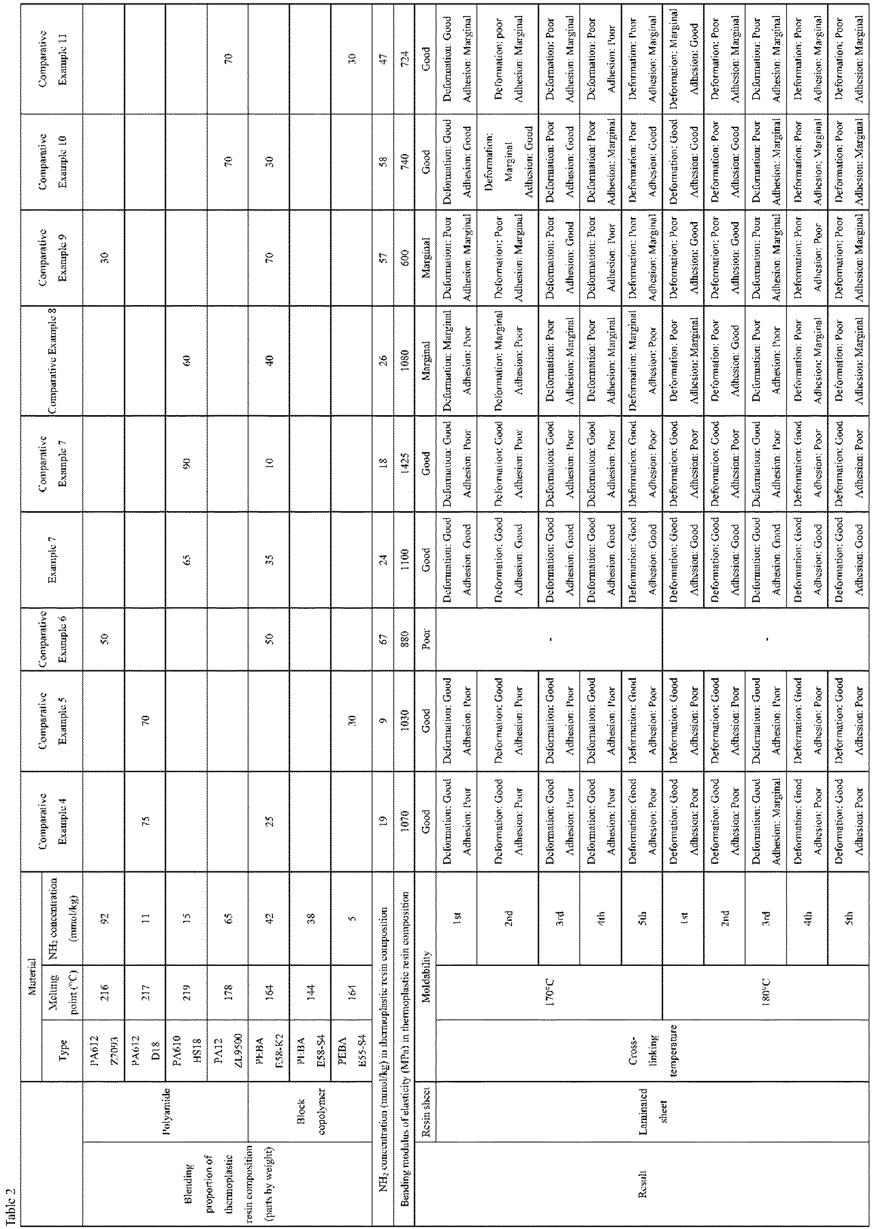

As indicated in Tables 1 and 2, the evaluation results of the moldability in Examples 1 to 7 within the scope of the present invention were good as compared with those in Comparative Examples 2, 3, 6, 8, and 9 in which the ratio of the weight of the first polyamide (A) to the weight of the block copolymer (B) was 60/40 or less.

Also, as indicated in Tables 1 and 2, the evaluation results of the deformability in Examples 1 to 7 within the scope of the present invention were good as compared with those in Comparative Examples 2, 3, 8, and 9 in which the ratio of the weight of the first polyamide (A) to the weight of the block copolymer (B) was 60/40 or less and Comparative Examples 10 and 11 in which the melting point of the polyamide was 178°C.

Furthermore, as indicated in Tables 1 and 2, the evaluation results of the adhesion in Examples 1 to 7 within the scope of the present invention were good as compared with Comparative Example 1 in which the ratio of the weight of the first polyamide (A) to the weight of the block copolymer (B) was 90/10 or more, Comparative Examples 4 and 5 in which the amino group concentration (NH₂ concentration) of the thermoplastic resin composition was 19 mmol/kg or less, Comparative Example 7 in which the ratio of the weight of the first polyamide (A) to the weight of the block copolymer (B) was 90/10 and the amino group concentration (NH₂ concentration) of the thermoplastic resin composition was 18 mmol/kg, Comparative Examples 8 and 9 in which the ratio of the weight of the first polyamide (A) to the weight of the block copolymer (B) was 60/40 or less, and Comparative Examples 10 and 11 in which the melting temperature of the polyamide was 178°C.

Accordingly, the present invention can provide a thermoplastic resin composition which prevents a resin sheet from being deformed even at a high cross-linking temperature, which provides excellent adhesion between a resin sheet layer and a rubber layer, and also which provides excellent moldability at the time of producing the resin sheet.

### Disclosure item

Each of the following items is disclosure of a preferred embodiment.

### Item 1

A thermoplastic resin composition to be used for molding a resin sheet, the resin sheet to be used in cross-linking adhesion with rubber, the thermoplastic resin composition including a thermoplastic resin including a first polyamide (A) having a melting point of from 180°C to 230°C and a block copolymer (B) containing a second polyamide and a polyether,
in which a ratio of a weight of the first polyamide (A) to a weight of the block copolymer (B) is from 65/35 to 85/15, and
the thermoplastic resin composition has an amino group concentration of 20 mmol/kg or more.

### Item 2

The thermoplastic resin composition according to item 1,
in which the first polyamide (A) has an amino group concentration of 20 mmol/kg or more, and
the block copolymer (B) has an amino group concentration of 20 mmol/kg or more.

### Item 3

The thermoplastic resin composition according to item 1 or 2, in which the thermoplastic resin composition has an amino group concentration of 40 mmol/kg or more.

### Item 4

The thermoplastic resin composition according to any one of items 1 to 3, in which the first polyamide (A) includes at least one selected from the group consisting of polyamide 612, polyamide 610, polyamide 613, and polyamide 6.

### Item 5

The thermoplastic resin composition according to any one of items 1 to 4, in which a bending modulus of elasticity according to ISO178 is from 1000 to 1200 MPa.

### Item 6

A resin sheet obtained by molding the thermoplastic resin composition described in any one of items 1 to 5.

### Item 7

A laminated sheet including: a resin sheet layer including the resin sheet described in item 6; and a rubber layer including rubber, the resin sheet layer and the rubber layer being laminated,
in which the resin sheet layer and the rubber layer are cross-linked and adhered to each other.

## Claims

1. A thermoplastic resin composition to be used for molding a resin sheet, the resin sheet to be used in cross-linking adhesion with rubber, the thermoplastic resin composition comprising a thermoplastic resin comprising a first polyamide (A) having a melting point of from 180°C to 230°C and a block copolymer (B) containing a second polyamide and a polyether,
wherein a ratio of a weight of the first polyamide (A) to a weight of the block copolymer (B) is from 65/35 to 85/15, and
the thermoplastic resin composition has an amino group concentration of 20 mmol/kg or more.

2. The thermoplastic resin composition according to claim 1,
wherein the first polyamide (A) has an amino group concentration of 20 mmol/kg or more, and
the block copolymer (B) has an amino group concentration of 20 mmol/kg or more.

3. The thermoplastic resin composition according to claim 1 or 2, wherein the thermoplastic resin composition has an amino group concentration of 40 mmol/kg or more.

4. The thermoplastic resin composition according to claim 1 or 2, wherein the first polyamide (A) comprises at least one selected from the group consisting of polyamide 612, polyamide 610, polyamide 613, and polyamide 6.

5. The thermoplastic resin composition according to claim 1 or 2, wherein a bending modulus of elasticity according to ISO178 is from 1000 to 1200 MPa.

6. A resin sheet obtained by molding the thermoplastic resin composition described in claim 1 or 2.

7. A laminated sheet comprising: a resin sheet layer comprising the resin sheet described in claim 6; and a rubber layer comprising rubber, the resin sheet layer and the rubber layer being laminated,
wherein the resin sheet layer and the rubber layer are cross-linked and adhered to each other.
